(19) Europäisches Patentamt
European Patent Office
Office européen des brevets

(11) EP 0 634 992 B1

(12) # EUROPÄISCHE PATENTSCHRIFT

(45) Veröffentlichungstag und Bekanntmachung des Hinweises auf die Patenterteilung:
**04.09.1996 Patentblatt 1996/36**

(21) Anmeldenummer: **93908796.1**

(22) Anmeldetag: **01.04.1993**

(51) Int. Cl.$^6$: **C05G 3/08**

(86) Internationale Anmeldenummer:
**PCT/DE93/00305**

(87) Internationale Veröffentlichungsnummer:
**WO 93/21134 (28.10.1993 Gazette 1993/26)**

(54) **WIRKSTOFFKOMBINATION ZUR HEMMUNG BZW. REGELUNG DER NITRIFIKATION VON AMMONIUMSTICKSTOFF IN KULTURBÖDEN UND SUBSTRATEN**

COMBINATIONS OF ACTIVE SUBSTANCES FOR PREVENTING OR REGULATING THE NITRIFICATION OF AMMONIUM NITROGEN IN ARABLE GROUNDS AND SUBSTRATES

COMBINAISON DE MATIERES ACTIVES POUR L'INHIBITION OU LA REGULATION DE LA NITRIFICATION DE L'AZOTE D'AMMONIUM DANS DES SOLS CULTIVES ET DES SUBSTRATS

(84) Benannte Vertragsstaaten:
**AT BE CH DE DK ES FR GB GR IE IT LI MC NL PT SE**

(30) Priorität: **08.04.1992 DE 4211808**

(43) Veröffentlichungstag der Anmeldung:
**25.01.1995 Patentblatt 1995/04**

(73) Patentinhaber: **SKW STICKSTOFFWERKE PIESTERITZ GmbH**
**D-06886 Lutherstadt Wittenberg (DE)**

(72) Erfinder:
- **MICHEL, Hans-Jürgen**
  **D-7010 Leipzig (DE)**
- **LANG, Sieghard**
  **D-7101 Cunnersdorf (DE)**
- **HARTBRICH, Hans-Joachim**
  **D-4050 Halle (DE)**
- **GRABARSE, Margit**
  **D-7241 Seelingstädt (DE)**
- **BÖHLAND, Heinz**
  **D-5700 Mühlhausen (DE)**
- **MÖCKEL, Klaus**
  **D-5700 Mühlhausen (DE)**
- **THIEME, Hermann**
  **D-4600 Wittenberg (DE)**

(56) Entgegenhaltungen:
**EP-A- 0 289 757**
**DE-A- 4 018 395**
**US-A- 4 523 940**

EP 0 634 992 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Wirkstoffkombinationen zur Hemmung bzw. Regelung der Nitrifikation von Ammoniumstickstoff, insbesondere aus mineralischen und organischen Düngemitteln stammend, in Kulturböden und Substraten.

Um die Verluste an Ammoniumstickstoff infolge Nitrifikation zu reduzieren, somit auf der einen Seite die Ausnutzung des Düngemittelstickstoffs entscheidend zu verbessern, auf der anderen Seite die Nitratbelastung des Grund- und Oberflächerwassers zu minimieren, ist es üblich, dem Boden geeignete Stoffe zuzuführen, die eine Hemmung bzw. Regelung des Nitrifikationsprozesses bewirken.

Es ist bekannt, daß substituierte Pyrazole (US 3 494 757, DD 131 063, DD 133 088 und DE 4 018 395), komplexchemische Verbindungen (DD 230 523 und US 4 523 940) sowie Metallsalze des unsubstituierten Pyrazols (JA 72-47 182) als auch substituierter Pyrazole (US 4 522 642) den Nitrifikationsprozeß hemmen. Über gleiche Eigenschaften verfügt Dicyandiamid (DE 2 531 962, JA 73-90 850, FR 1 232 366).

Weiterhin wurde angegeben, daß Wirkstoffkombinationen substituierter Pyrazole und/oder deren Azoliumsalze sowie Dicyandiamid synergistisch bedingte Wirkungsverbesserungen bei der Verzögerung des Nitrifikationsprozesses induzieren (DD 222 471).

Ziel der Erfindung ist es, Wirkstoffkombinationen zu entwickeln, die eine verbesserte synergistische Wirkung hinsichtlich der Hemmung bzw. Regelung der Nitrifikation von Ammoniumstickstoff aufweisen und somit einen effektiveren Einsatz gegenüber Einzelverbindungen bzw. den bekannten Kombinationen gestatten.

Es wurde gefunden, daß Wirkstoffkombinationen, bestehend aus mindestens einer Verbindung der allgemeinen Formel I

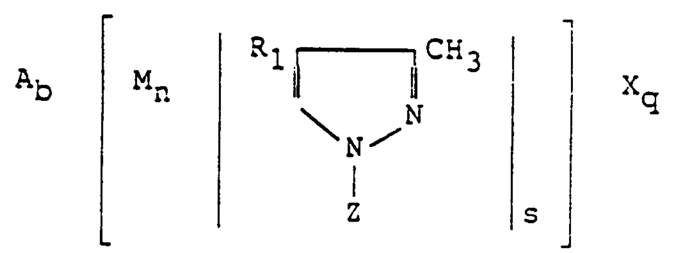

Formel I

wobei

- M mit n = 1 und größer im Falle von Koordinationsverbindungen für diverse ein- und mehrwertige Metallionen, vorzugsweise für Erdalkali, Fe, Zn, Ni, Co, Mn, Cu, Cr, Mo und Al, steht, im Falle von Metallsalzen der substituierten Pyrazole jedoch mit n = 0 zu negieren ist,
- A im Falle von Anionenkomplexen und Pyrazolaten das Gegenion, vorzugsweise Ammonium, Alkali und Erdalkali, bei Anionenkomplexen auch das 3-Methylpyrazoliumkation sein kann, im Falle von Metallsalzen zusätzlich für Fe und Al stehen kann, und b = 0 bis 4 ist.
- X gleich oder verschieden sein kann und diverse ein- und mehrwertige anorganische bzw. organische Anionen wie beispielsweise Acetat, Nitrat, Sulfat, Halogenid, Thiocyanat mit q = 0 bis 6 verkörpert,
- $R_1$ Wasserstoff, Methyl oder Halogen und
- Z Wasserstoff, $CONH_2$, $CNHNH_2$ oder $CSNH_2$ darstellt, im Fall der Pyrazolate jedoch vollkommen bedeutungslos wird,
- s Werte zwischen 1 und 6 ausweist

und Dicyandiamid entsprechend Formel II

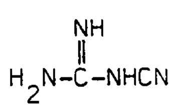

Formel II

zu einer wesentlichen Verbesserung der Hemmung des Nitrifikationsprozesses führen.
Aus chemischer Sicht ist dieser Effekt insofern überraschend, als daß zu erwarten war, daß das im Verlaufe des DCD-Abbaus im Boden entstehende stärker basisch und somit nucleophilere Guanidin (RATHSACK: Landwirtschaftliche Forschung 7/1954/55 S. 116 ... 123) über Ligandenaustauschreaktionen alle dann über geringere Ligandeneigenschaften verfügenden, unterschiedlich substituierten Pyrazole aus ihrer Koordinationsphäre verdrängt und dadurch den Residualeffekt negative beeinflußt, was wiederum unter dieser Voraussetzung den höheren Aufwand für die Herstellung/Anwendung der Koordinationsverbindungen in der erfindungsgemäßen Kombination nicht mehr rechtfertigen würde. Diese verbesserte Nitrifikationshemmung der erfindungsgemäßen Kombination äußert sich in einer verlängerten Dauerwirkung und basiert eindeutig auf synergistischen Effekten. Diese synergistischen Wirkungsverbesserungen treten in einem Bereich der Mischungsverhältnisse beider Kombinationspartner von 1 : 1 bis 1 : 400, bevorzugt jedoch von 1 : 10 bis 1 : 100 (Verbindung Formel I : Dicyandiamid), auf.
Das Dicyandiamid verkörpert dabei den Synergisten zu den einzelnen Koordinationsverbindungen, wie es Ergebnisse unter Einbeziehung unterschiedlicher Strukturvarianten ausweisen.
Die erfindungsgemäßen Kombinationen haben demnach den Vorteil, daß sie sowohl gegenüber den Einzelverbindungen als auch gegenüber der bekannten Wirkstoffkombination substituierter Pyrazole mit DCD höhere Residualeffekte aufweisen und somit die Aufwandmenge bei verbesserter Dauerwirkung erheblich gesenkt werden kann. Daraus ergeben sich geringere Verfahrenskosten, eine geringere Belastung des ökologischen Systems und die Möglichkeit einer früheren Applikation der Stickstoffdüngemittel.

Die erfindungsgemäßen Kombinationen können im Gemisch mit oder gemeinsam mit festen oder flüssigen mineralischen oder organischen Düngemitteln, die Harnstoff und/oder Ammoniak und/oder Ammoniumstickstoff enthalten, angewendet werden. Sie können außerdem in Form eines festen oder flüssigen Konzentrates,z. B. in Wasser oder im Gemisch mit einem festen, vermahlenen oder granulierten Trägerstoff, zur Anwendung kommen.

Die erfindungsgemäßen Kombinationen können auch gemeinsam mit anderen Agrochemikalien, wie z. B. Pflanzenschutz- und Schädlingsbekämpfungsmitteln sowie mit anderen agrotechnischen Maßnahmen appliziert werden.
Die Kombinationen werden zweckmäßig kurz vor, gleichzeitig oder kurz nach der Ausbringung der Düngemittel mit einer Aufwandmenge von 0,2 bis 50 kg Wirkstoff/ha, vorzugsweise 0,5 bis 20 kg/ha, ausgebracht. Verwendet man sie zusammen mit einem festen oder flüssigen Dünger, so können sie mit 0,1 bis 50 Gewichtsprozenten, vorzugsweise jedoch 1 bis 30 Gewichtsprozenten, des Düngemittelstickstoffs verwendet werden.

Die nachfolgenden Beispiele dienen der Erläuterung ohne diese einzuschränken.
Tabelle 1 gibt einen Überblick über einige, speziell für die Kombination mit DCD synthetisierte Verbindungen, deren nitrifikationshemmende Wirkung bereits in den Patenten DD 230 523 und DE 4 018 395 größtenteils beschrieben wurde.
Darauf aufbauend wurden einzelne Verbindungen zur Kombination mit Dicyandiamid ausgewählt, wobei es erklärtes Ziel dieser Erfindung war, anhand der nachfolgenden Beispiele (Tabellen 2 und 3) zu beweisen, daß unabhängig vom Strukturtyp des Metallkomplexes durch die Kombination mit Dicyandiamid eine synergistische Wirkungsverbesserung erreicht wird, die sich in einer erhöhten Residualwirkung widerspiegelt.

Tabelle 1

| Nr. der Verbindung | Struktur | Hemmung in % bis zu den Tagen | | | | |
|---|---|---|---|---|---|---|
| | | 14 | 28 | 42 | 56 | 70 |
| 1 | $[Zn(Y)_4]Cl_2$ | 100 | 94 | 100 | 76 | 71 |
| 2 | $[Zn(Y)_4]SO_4$ | 100 | 82 | 100 | 71 | 72 |
| 3 | $[Co(Y)_4]SO_4$ | 99 | 75 | 100 | 80 | 75 |
| 4 | $[Co(Y)_4]Cl_2$ | 100 | 93 | 100 | 84 | 78 |
| 5 | $[Ni(Y)_4](CH_3COO)_2$ | 100 | 81 | 100 | 81 | 80 |
| 6 | $[Ni(Y)_6](BF_4)_2$ | 99 | 100 | 100 | 68 | 65 |
| 7 | $[Zn(Y)_3H_2O]SO_4$ | 94 | 93 | 92 | 88 | 79 |
| 8 | $[(NH_4)_2Zn(Y)_2(NCS)_4]xH_2O$ | 100 | 93 | 96 | 86 | 78 |
| 9 | $[Mn(Y)_2(H_2O)_2]SO_4$ | 100 | 93 | 100 | 78 | 79 |
| 10 | $(YH)_2[ZnCl_2(NCS)_2]$ | 100 | 95 | 88 | 75 | 70 |
| 11 | $[Cu(Y)_4Cl_2]xH_2O$ | 100 | 93 | 100 | 55 | 51 |
| 12 | $[Mg(Y)_2(H_2O)]SO_4$ | 100 | 94 | 100 | 84 | 71 |
| 13 | $[Mg(Y)_2]SO_4$ | 100 | 100 | 100 | 87 | 82 |
| 14 | $[Co(Y)_4](CH_3COO)_2$ | 83 | 90 | 84 | 77 | 75 |
| 15 | $[Co(Y)_2]F_2$ | 84 | 93 | 84 | 77 | 76 |
| 16 | $[Co(Y)_4](SiF_6)$ | 82 | 90 | 84 | 78 | 75 |
| 17 | $[Ni(Y)_6]J_2$ | 82 | 92 | 85 | 80 | 77 |
| 18 | $[Mg(Y)_6]Cl_2$ | 100 | 100 | 100 | 88 | 82 |
| 19 | $Ca(L)_2$ | 98 | 93 | 84 | 79 | 69 |
| 20 | NaL | 99 | 97 | 80 | 75 | 70 |
| 21 | $[Mg(K)_2](NO_3)_2$ | 100 | 100 | 98 | 82 | 78 |
| 22 | $[Cu(G)_2]Cl_2$ | 99 | 99 | 99 | 88 | 55 |
| 23 | $[Cu(G)]Cl_2$ | 99 | 99 | 99 | 91 | 65 |
| 24 | $[Zn(G)_2]Cl_2$ | 99 | 99 | 99 | 88 | 61 |
| 25 | $[Ni(G)_2]Cl_2.2H_2O$ | 100 | 100 | 99 | 85 | 39 |

Y 3-Methylpyrazol
L 3-Methylpyrazolation
K 1-Carbamoyl-3-methylpyrazol
G 1-Guanyl-3-methylpyrazol

Beispiel 1

Die erfindungsgemäßen Kombinationen der Verbindung 18 (Tabelle 1) und des Dicyandiamids wurden einem sandigen Lehmboden in Mischungsverhältnissen 1 : 1 bis 1 : 400 in unterschiedlichen absoluten Wirkstoffkonzentrationen zugegeben. Zum Vergleich wurden Konzentrationsreihen der Verbindung 18 (0,3 - 1,5 ppm) und des Dicyandiamids (8 - 20 ppm) herangezogen. Gleichzeitig erfolgte eine Stickstoffgabe von 20 mg N/100 g Boden in Form von Harnstoff. Nach Befeuchten des Bodens auf 50 % der maximalen Wasserkapazität wurde dieser bei 20 °C inkubiert und der gebildete Nitrat- bzw. Nitritstickstoff nach 14, 28, 42, 56 und 70 Tagen bestimmt.
Die ausgewiesene Hemmung der Nitrifikation in Prozent berechnet sich wie folgt:

$$\% \text{ Hemmung} = \frac{a - b}{a - c} \cdot 100$$

a Nitrit- und Nitratgehalt der Kontrolle
b Nitrit- und Nitratgehalt der Probe mit Wirkstoff
c Nitrit- und Nitratgehalt des verwendeten Bodens

Tabelle 2

| Residualwirkung von Verbindung 18, des Dicyandiamids bzw. deren Kombinationen | | | | | | |
|---|---|---|---|---|---|---|
| Verbindung 18 (ppm) | Dicyandiamid (ppm) | Mischungsverhältnis | % Hemmung zu den Tagen | | | |
| | | | 28 | 42 | 56 | 70 |
| 0,3 | - | - | 50 | 20 | 0 | 0 |
| 0,5 | - | - | 80 | 50 | 18 | 3 |
| 0,8 | - | - | 93 | 87 | 55 | 45 |
| 1,2 | - | - | 100 | 94 | 67 | 63 |
| 1,5 | - | - | 100 | 100 | 93 | 80 |
| - | 8 | - | 51 | 15 | 0 | 0 |
| - | 10 | - | 63 | 30 | 10 | 0 |
| - | 12 | - | 70 | 45 | 21 | 0 |
| - | 16 | - | 82 | 53 | 30 | 3 |
| - | 20 | - | 85 | 60 | 35 | 10 |
| 0,5 | 0,5 | 1 : 1 | 80 | 62 | 51 | 40 |
| 0,5 | 5 | 1 : 10 | 85 | 75 | 62 | 53 |
| 0,25 | 5 | 1 : 20 | 74 | 51 | 31 | 4 |
| 0,20 | 16 | 1 : 80 | 88 | 71 | 53 | 45 |
| 0,10 | 10 | 1 : 100 | 78 | 63 | 44 | 31 |
| 0,06 | 12 | 1 : 200 | 75 | 61 | 45 | 28 |
| 0,056 | 20 | 1 : 360 | 71 | 55 | 48 | 35 |
| 0,025 | 16 | 1 : 400 | 73 | 68 | 51 | 40 |

Wie die Tabelle 2 ausweist, wird durch die Kombination von Verbindung 18 mit Dicyandiamid im gesamten Mischungsbereich in Abhängigkeit von der absoluten Wirkstoffkonzentration eine verlängerte Residualwirkung erzielt. Dabei ist unter Berücksichtigung der absoluten Konzentration der Kombinationspartner die günstigste Wirkungsverbesserung bei einem Mischungsverhältnis von 1 : 10 bis 1 : 100 gegeben.
In den folgenden Beispielen wurden deshalb die Mischungsverhältnisse 1 : 25, 1 : 50 und 1 : 75 gewählt.

<u>Beispiel 2</u>

Die Verbindungen 9, 10, 18, 19 und 21 (Tabelle 1) wurden mit Dicyandiamid in den Mischungsverhältnissen 1 : 25, 1 : 50 und 1 : 75 kombiniert und die Residualwirkung im Vergleich zu den reinen Wirkstoffen ermittelt.
Dazu wurden die Wirkstoffe und Kombinationen mit einem lehmigen Sandboden in den zu der Tabelle 3 angegebenen Mischungsverhältnissen sowie den absoluten Wirkstoffkonzentrationen vermischt.
Als N-Quelle diente Gülle (20 mg Gesamt-N/100 g Boden). Die Versuchsdurchführung und Berechnung der prozentualen Hemmung erfolgte analog Beispiel 1.

Tabelle 3

| Residualwirkung verschiedener Metallkomplexe, Metallpyrazolate und des Dicyandiamids sowie der entsprechenden Kombinationen dieser Verbindungen mit Dicyandiamid im Vergleich zu 3-Methylpyrazol | | | | | | |
|---|---|---|---|---|---|---|
| Substanz/Kombination | ppm | % Hemmung zu den Tagen | | | | |
| | | 14 | 28 | 42 | 56 | 70 |
| Verbindung 9 | 0,5 | 78 | 48 | 25 | 0 | 0 |
| 1 : 25 | 10 | 94 | 92 | 87 | 70 | 40 |
| 1 : 50 | 10 | 96 | 93 | 88 | 72 | 41 |
| 1 : 75 | 10 | 96 | 93 | 88 | 75 | 38 |
| Verbindung 10 | 0,5 | 77 | 51 | 30 | 0 | 0 |
| 1 : 25 | 10 | 98 | 97 | 88 | 74 | 42 |
| 1 : 50 | 10 | 100 | 93 | 85 | 68 | 38 |
| 1 : 75 | 10 | 97 | 95 | 85 | 68 | 35 |
| Verbindung 18 | 0,5 | 85 | 53 | 35 | 0 | 0 |
| 1 : 25 | 10 | 98 | 96 | 93 | 82 | 45 |
| 1 : 50 | 10 | 98 | 92 | 88 | 78 | 42 |
| 1 : 75 | 10 | 97 | 94 | 90 | 78 | 43 |
| Verbindung 19 | 0,5 | 94 | 66 | 23 | 13 | 0 |
| 1 : 25 | 10 | 98 | 92 | 90 | 75 | 47 |
| 1 : 50 | 10 | 99 | 96 | 92 | 78 | 52 |
| 1 : 75 | 10 | 97 | 91 | 90 | 69 | 44 |
| Verbindung 21 | 0,5 | 96 | 91 | 45 | 23 | 10 |
| 1 : 25 | 10 | 98 | 92 | 89 | 72 | 46 |
| 1 : 50 | 10 | 97 | 90 | 89 | 77 | 48 |
| 1 : 75 | 10 | 97 | 91 | 86 | 73 | 45 |
| Dicyandiamid | 10 | 86 | 78 | 37 | 0 | 0 |
| | 15 | 98 | 94 | 71 | 33 | 0 |
| | 20 | 100 | 100 | 83 | 72 | 48 |
| 3-Methylpyrazol | 0,5 | 76 | 55 | 21 | 0 | 0 |
| 1 : 25 | 10 | 94 | 92 | 78 | 61 | 30 |
| 1 : 50 | 10 | 96 | 95 | 82 | 62 | 33 |
| 1 : 75 | 10 | 95 | 92 | 88 | 58 | 29 |

Aus der Tabelle 3 ist ersichtlich, daß die Wirkstoffkombinationen in den angegebenen Mischungsverhältnissen zu einer wesentlichen Wirkungsverbesserung sowohl im Vergleich zu den Einzelkomponenten als auch zu der bekannten Wirkstoffkombination 3-Methylpyrazol/DCD führen.

Beispiel 3

Als Kombinationspartner für DCD wurde die Verbindung 24 eingesetzt.
Die erfindungsgemäßen Kombinationen wurden in den der Tabelle 4 zu entnehmenden Mischungsverhältnissen und Konzentrationen gemeinsam mit Harnstoff als N-Quelle einem schwarzerdeähnlichen sandigen Lehmboden zugesetzt, auf 50 % der maximalen Wasserkapazität befeuchtet und innig vermischt. Die Höhe der N-Gabe betrug 20 mg N/100

g Boden. Die innig vermischten Bodenproben wurden in Plasteflaschen gefüllt, verschlossen, bei 20 °C inkubiert und der zeitliche Verlauf der Nitrit- und Nitratbildung sowie der Ammoniumstickstoffabnahme verfolgt.
Als Kontrolle diente der gleiche Versuchsansatz ohne Mittelzugabe. Die Probenahme wurde entsprechend der Hemmwirkung variabel gestaltet.

Nach logarithmischer Transformation der Summe von Nitrit- und Nitratgehalt sowie der Inkubationszeit in Tagen wurden die Meßwerte der einzelnen Kombinationspartner bzw. Mischungsverhältnisse mittels linearer Regression verrechnet und der $T_{50}$-Wert bestimmt, der die Zeit in Tagen darstellt, nach der 50 % des Düngemittelstickstoffs im Boden nitrifizert wurden.

Tabelle 4

| Prozentuale Wirkstoffeinsparung bzw. Wirkungsverbesserung gegenüber den nach den Äquivalenzmodell berechneten Werten | | | |
|---|---|---|---|
| Mischungsverhältnis Vbdg. 24: DCD | Konzentration der Kombinationen (ppm) | Dosiseinsparung % | Wirkungsverbesserung (Tage) |
| 0,2 : 99,8 | 22,55 | 0 | 0 |
| 0,2 : 99,8 | 45,1 | 70 | 7,4 |
| 2 : 98 | 12,75 | 89 | 25,0 |
| 2 : 98 | 25,5 | 78 | 11,0 |
| 15 : 85 | 2,95 | 62 | 23,0 |
| 15 : 85 | 5,9 | 86 | 20,0 |

Sowohl Tabelle 4, aber besonders Tabelle 3 verdeutlichen, daß die Wirkstoffkombination von Koordinationsverbindungen, insbesondere des 1-Guanyl-3-methylpyrazols mit DCD, im Vergleich zu der bekannten Lösung gemäß DD 222471 zu einer erheblichen Wirkungsverbesserung über den gesamten Bereich der Mischungsverhältnisse führt.

## Patentansprüche

1. Wirkstoffkombination zur Hemmung bzw. Regelung der Nitrifikation in Kulturböden und Substraten dadurch gekennzeichnet, daß sie eine Verbindung der allgemeinen Formel I

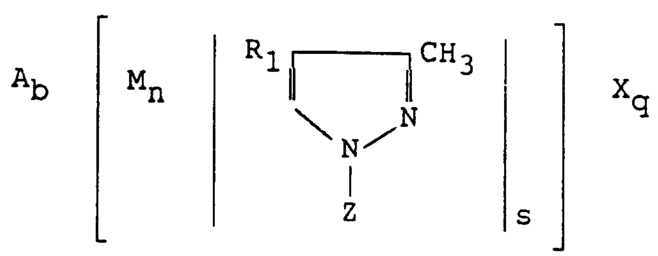

Formel I

wobei

M mit n = 1 und größer im Falle von Koordinationsverbindungen für diverse ein- und mehrwertige Metallionen, vorzugsweise für Erdalkali, Fe, Zn, Ni, Co, Mn, Cu, Cr, Mo und Al steht, im Falle von Metallsalzen der substituierten Pyrazole jedoch mit n = 0 zu negieren ist,

A im Falle von Anionenkomplexen und Pyrazolaten das Gegenion, vorzugsweise Ammonium, Alkali und Erdalkali, bei Anionenkomplexen auch das 3-Methylpyrazoliumkation sein kann, im Falle von Metallsalzen zusätzlich für Fe und Al stehen kann, und b = 0 bis 4 ist,

X gleich oder verschieden sein kann und diverse ein- und mehrwertige anorganische bzw. organische Anionen wie beispielsweise Acetat, Nitrat, Sulfat, Halogenid, Thiocyanat mit q = 0 bis 6 verkörpert,

$R_1$ Wasserstoff, Methyl oder Halogen und

Z Wasserstoff, $CONH_2$, $CNHNH_2$ oder $CSNH_2$ darstellt, im Fall der Pyrazolate jedoch vollkommen bedeutungslos ist,

s Werte zwischen 1 und 6 ausweist

und Dicyandiamid entsprechend Formel II

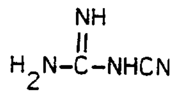

Formel II

in Mischungsverhältnissen von 1 : 1 bis 1 : 400, vorzugsweise 1 : 10 bis 1 : 100, enthalten.

**2.** Wirkstoffkombination gemäß Anspruch 1, dadurch gekennzeichnet, daß die Wirkstoffe im Gemisch oder gemeinsam mit festen oder flüssigen mineralischen oder organischen Düngemitteln, die Harnstoff und/oder Ammoniak und/oder Ammoniumstickstoff enthalten, in Form eines festen oder flüssigen Konzentrates oder im Gemisch mit einem festen vermahlenen oder granulierten Trägerstoff zur Anwendung kommt.

**3.** Wirkstoffkombination gemäß Anspruch 1, dadurch gekennzeichnet, daß sie vor, mit oder nach der Düngerapplikation zur Anwendung kommt.

**4.** Wirkstoffkombination gemäß Anspruch 1 und 2, dadurch gekennzeichnet, daß sie gemeinsam mit anderen Agrochemikalien und/oder agrotechnischen Maßnahmen zur Anwendung kommt.

**5.** Wirkstoffkombination gemäß Anspruch 1 bis 4, dadurch gekennzeichnet, daß sie mit einer Aufwandmenge von 0,2 bis 50 kg Wirkstoff pro Hektar, vorzugsweise 0,5 bis 20 kg pro Hektar, appliziert wird.

**6.** Wirkstoffkombination gemäß Anspruch 1 bis 4, dadurch gekennzeichnet, daß sie den Düngemitteln in Mengen von 0,1 bis 50 Gewichtsprozenten, vorzugsweise jedoch 1 bis 30 Gewichtsprozenten, des Düngemittelstickstoffs beigefügt wird.

## Claims

**1.** A combination of active ingredients for inhibiting or controlling the nitration of culturing soils or substrates, characterized by the fact that said combination contains a compound having the general composition depicted in Formula I,

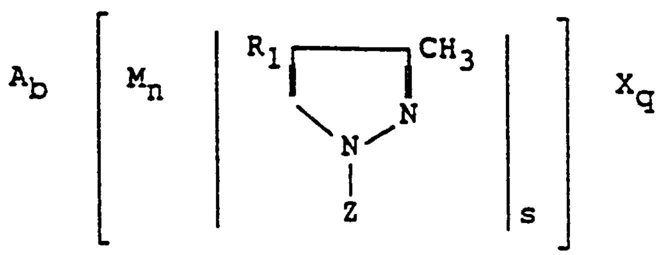

Formula I

where

M represents various univalent or multivalent metallic ions, preferentially of the alkaline-earth metals, Fe, Zn, Ni, Co, Mn, Cu, Cr, Mo, or Al, and n = 1 and greater in the case of coordination compounds, but is to be voided by setting n = 0 in the case of metallic salts of substituted pyrazoles,

A might represent the complementary ion, preferentially ammonium or an alkali or alkaline-earth metal, in the case of anionic complexes and pyrazolates, but might also represent the 3-methylpyrazolium cation

in the case of anionic complexes Fe or Al in the case of metallic salts, and b is an integer ranging from 0 to 4,

X might represent identical or differing anions or various univalent or multivalent inorganic or organic anions, such as acetate, nitrate, sulfate, halide, or thiocyanate anions, and q is an integer ranging from 0 to 6,

$R_1$ represents either hydrogen or methyl or halogen radicals,

Z represents hydrogen, $CONH_2$, $CNHNH_2$, or $CSNH_2$, but has no significance in the case of pyrazolates, and

s is an integer from 1 to 6,

and dicyanodiamide, as depicted in Formula II,

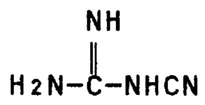

Formula II

in mixing ratios ranging from 1:1 to 1:400, preferentially in mixing ratios ranging from 1:10 to 1:100.

**2.** A combination of active ingredients per Claim 1, characterized by the fact that said active ingredients of said combination are applied alone or in conjunction with solid or liquid mineral or organic fertilizers containing urea and/or ammonia and/or ammonium nitrate in the form of solid or liquid concentrates, or as an admixture with a powdered or granular solid base material.

**3.** A combination of active ingredients per Claim 1, characterized by the fact that said combination is applied prior to, in conjunction with, or subsequent to the application of fertilizer.

**4.** A combination of active ingredients per Claims 1 and 2, characterized by the fact that said combination is applied in conjunction with other agrochemicals and/or with the conduct of other agricultural measures.

**5.** A combination of active ingredients per Claims 1 through 4, characterized by the fact that said combination is applied in dosages of 0.2 to 50 kg of said active ingredients per hectare, preferentially in dosages of 0.5 to 20 kg of same per hectare.

**6.** A combination of active ingredients per Claims 1 through 4, characterized by the fact that said combination is added to fertilizers in percentages of 0.1 to 50 percent by weight, preferentially, however, in percentages of 1 to 30 percent by weight relative to their nitrogen contents.

## Revendications

**1.** Combinaison d'agents actifs pour inhibition voire régulation de la nitrification dans les sols cultivables et les substrats caractérisée en ce qu'elle contient une combinaison de la formule générale I

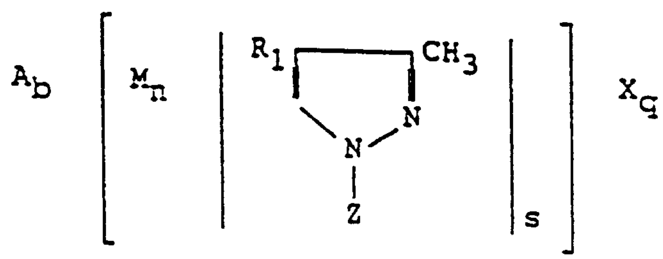

Formule I

M avec n = 1 et plus dans le cas de combinaisons de coordination étant pour divers ions métalliques momo ou plurivalents, de préférence pour base alcalino-terreuse, Fe, Zn, Ni, Co, Mn, Cu, Cr, Mo et Al, mais dans le cas de sels métalliques des pyrasols substitués devant être nié avec n = 0,

A dans le cas de complexes anioniques et de pyrazolates, pouvant être le contre-ion, de préférence ammonium, alcali et base alcalino-terreuses, pour des complexes anioniques également le ion méthylpyrazoliumcate 3, dans le cas de sels métalliques en plus pouvant être pour Fe et Al et b étant = 0 à 4,

x pouvant être égal ou différent et représentant divers anions anorganiques voire organiques mono et plurivalents tels qu'acétate, nitrate, sulfate, halogénide, thiocyanate avec q = 0 à 6,

$R_1$ repésentant hydrogène, méthyle ou halogène et

Z hydrogène, CONH2, CNHNH2 ou CSNH2, dans le cas des pyrazolates étant complètement sans importance,

s présentant des valeurs entre 1 et 6

et des dycianodiamides conformément à la formule II

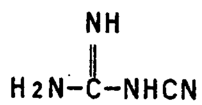

Formule II

dans des rapports de mélange de 1 : 1 à 1 : 400, de préférence 1 : 10 à 1 : 100.

2. Combinaison d'agents actifs selon la revendication 1 caractérisée en ce que les agents sont appliqués dans le mélange ou ensemble avec des engrais solides ou liquides minéraux ou organiques contenant de l'urée et/ou de l'ammoniaque et/ou de l'azote d'ammonium, sous la forme d'un concentré solide ou liquide ou dans un mélange avec matière porteuse solide, moulue ou granulée.

3. Combinaison d'agents actifs selon la revendication 1 caractérisée en ce qu'elle est appliquée avant, avec ou après l'application de l'engrais.

4. Combinaison d'agents actifs selon les revendications 1 et 2 caractérisée en ce qu'elle est appliquée ensemble avec d'autres produits chimiques agricoles et/ou avec des, mesures agroteechniques.

5. Combinaison d'agents actifs selon les revendications 1 à 4 caractérisée en ce qu'elle est appliquée avec une quantité utilisée de 0,2 à 50 kg d'agent actif par hectare, de préférence 0,5 à 20 kg par hectare.

6. Combinaison d'agents actifs selon les revendications 1 à 4 caractérisée en ce qu'elle est ajoutée aux engrais dans des quantités de 0,1 à 50 pour cent de poids, de préférence cependant de 1 à 30 pour cent de poids de l'azote d'engrais.